# DEMANDE DE BREVET EUROPEEN

(11) **EP 2 020 652 A2**
(43) Date de publication de la demande: **04.02.2009**
(21) Numéro de dépôt: 08300247.7
(22) Date de dépôt: 29.07.2008
(51) Int. Cl.: G09B 9/02, G09B 9/28

(54) **Système hybride de commande de frein**

(30) Priorité: 31.07.2007 FR 0756855
(71) Demandeur: Renault S.A.S., 92100 Boulogne-Billancourt (FR)
(72) Inventeur: Vallee, Serge, 95220, Herblay (FR); Panerai, Francesco, 75116, Paris (FR)

(57) **Abrégé**

Dispositif de restitution d'efforts (1), mis en oeuvre dans la simulation d'une action de freinage opérée par un conducteur sur un simulateur de conduite, comprenant un système mécanique passif (4) relié à une commande de frein (2) prévue sur le simulateur,
en ce qu'il comprend en outre des moyens de mesure d'effort (30) pour simuler la restitution d'un effort appliqué à la commande de frein (2) au-delà des possibilités physiques du système mécanique passif (4).

## Description

L'invention concerne les dispositifs de restitution d'effort mis en oeuvre dans la simulation d'une action de freinage opérée par un conducteur sur un simulateur de conduite.

L'invention concerne en particulier la construction de l'interface de contrôle des lois de décélération.

La commande de frein (par exemple une ou un levier) d'un simulateur de conduite doit fournir à un conducteur la même interface fonctionnelle que d'un véhicule réel, en reproduisant une loi de décélération du véhicule réelle simulée ; cette loi doit représenter le plus fidèlement possible les sensations de freinage, afin que le simulateur puisse reproduire les « sensations réelles de décélération » d'un véhicule par mise en mouvement de la cabine du simulateur à l'actionnement de ladite commande.

Pour cela, il faut tenir compte non seulement de la force active par le conducteur sur la commande de frein, mais aussi de la force réactive par le dispositif de restitution d'effort. Le bilan de ces deux forces détermine alors la course effective de la commande de frein, et permet de définir une caractérisation du dispositif, corrélant la course effectuée par la commande de frein et l'effort ressenti par le conducteur lors du balayage de de travail de ladite commande.

L'invention est notamment destinée à être à des commandes de frein de type pédale de frein.

Sur un véhicule réel, les dispositifs de freinage à la pédale de frein des systèmes hydrauliques, comprenant des électrovannes qui, sous l'impulsion de signaux, appliquent une pression hydraulique dans les cylindres récepteurs du circuit de freinage. Un tel système comprend notamment un maître-cylindre, une servocommande hydraulique, et une pompe hydraulique.

Néanmoins, de tels systèmes ne peuvent mis en oeuvre sur un simulateur de conduite, pour des questions de sécurité. Par ailleurs, ils ne permettraient pas de répondre à la demande des bureaux d'étude, et ne seraient pas à la mise en place des lois de décélération.

Pour des questions de coût, la mise en place d'un dispositif de restitution d'effort actif n'est pas non plus envisagée sur un simulateur. Cela nécessiterait d'ailleurs de mettre en oeuvre de nouveaux projets de machines pour pouvoir les gérer.

C'est pourquoi la tendance actuelle est de mettre en oeuvre un système passif, comme par exemple un dispositif mécanique de générer un retour d'effort selon une loi physique de type ressort. Bien entendu, les des ressorts sont choisies en fonction des caractéristiques du véhicule réel simulé et de la loi représentée. La loi de décélération du véhicule simulé est alors établie en fonction de la course de la commande de frein, notamment la pédale de frein.

Cependant, un dispositif passif de ce type présente plusieurs inconvénients non résolus à ce jour.

D'une part, il ne fournir une course d'effort suffisante. En effet, généralement, le déplacement d'un dispositif mécanique passif conventionnel n'est d'une cinquantaine de millimètres, tandis que celui d'une pédale de frein d'un véhicule réel s'étend généralement sur une plage de 140 mm. Or, dans le cas d'un simulateur de conduite pour un véhicule automobile, il est actuellement demandé par les bureaux d'études de fournir une simulation couvrant la plage entière potentielle de la course de la pédale de frein. Plus précisément, il est nécessaire de fournir une corrélation entre la course de la et l'effort au freinage qui couvre une plage allant de 0 à 140mm.

Par exemple, dans le cas où un tel dispositif passif comprend un empilage de ressorts, c'est la géométrie de l'empilage successif des ressorts que les paramètres figés en de conception de chaque ressort (comme le pas de chaque ressort, ou plus précisément la distance séparant deux anneaux de chaque ressort) qui déterminent la course maximum que peut autoriser le dispositif passif.

Ainsi, l'application d'un dispositif mécanique de ce type permet une courte reproduction de la loi corrélant la course de la pédale et l'effort nécessaire au simulateur dynamique, et son utilisation conventionnelle réduit donc notablement l'espace de travail simulé, n'étant pas représentative de toute condition survenant dans le mode de fonctionnement nominal du véhicule réel simulé.

D'autre part, un dispositif de restitution passif conventionnel ne comprend pas de moyens de contrôle qui permettent de et de corriger d'éventuelles variations entre la restitution de l'effort et la course de la commande de frein. Or la cabine du simulateur de conduite est active (vibrations pour simuler l'état de la route, mouvements d'avant en arrière pour simuler les freinages et accélérations, etc.) et le risque de dérèglement du interne du dispositif passif n'est donc pas négligeable. Les venant du dispositif mécanique passif ne sont donc pas fiables. Pour éviter cela, l'étalonnage initial du dispositif mécanique passif et des contrôles périodiques des valeurs de restitution sont effectuées systématiquement, mais tout sur de mesures une physique du système mécanique, ce qui non seulement immobilise un certain temps le simulateur, maison plus induit un coût non négligeable dû à la non exploitation du simulateur et en matière de main d'oeuvre.

L'invention a pour but de proposer un nouveau système de de frein utilisant un dispositif de restitution d'effort pour un simulateur de conduite.

L'invention repose sur un dispositif physique et l'exploitation de l'effort appliqué à la pédale.

Le résultat par l'invention miteux représentatif des conditions survenant dans le mode de fonctionnement nominal du véhicule.

Un autre objectif de l'invention est de proposer un dispositif de restitution d'effort pour un simulateur de conduite qui contrôle automatiquement la mesure des caractéristiques internes du de mécanique passif.

Pour cela, l'invention propose un dispositif de restitution d'effort mis en oeuvre dans la simulation d'une action de freinage par un conducteur sur un simulateur de conduite, comprenant un système mécanique passif relié à une commande de frein prévue sur le simulateur, caractérisé en ce qu'il comprend en outre des moyens de mesure d'effort pour simuler la restitution d'un effort appliqué à la commande de frein au-delà des physiques du mécanique passif.

D'autres caractéristiques, buts et de la invention apparaîtront à la lecture de la description qui va suivre, au regard des dessins donnés à titre d'exemples non et sur desquels :
- La figure 1 une vue d'un de réalisation d'un dispositif de restitution d'effort pour un simulateur de conduite selon l'invention,
- La figure 2 présente le principe d'exploitation et d'implantation des moyens de mesure d'effort du dispositif selon le de de la figure 1,
- La figure 3 une courbe donnant l'effort appliqué par un conducteur sur le moyen de commande en fonction de la course effectuée par le moyen de commande.

Un simulateur de conduite sur lequel le dispositif 1 selon l'invention peut être monté comprend notamment une commande de frein, de préférence ici une pédale de frein 2 (bien que l'invention puisse être transposée sur une commande de frein de type levier), reliée à un dispositif mécanique passif 4, comprenant par exemple un empilement de ressorts 41 à un poussoir 42, et ayant un espace de travail (correspondant à la course que peut ta pédale 2 avant d'atteindre la butée mécanique 43, limite physique du dispositif 4 imposée par la structure dudit dispositif 4) de l'ordre de quelques dizaines de millimètres, disons dans cet exemple 50 mm.

Avantageusement, la pédale de frein 2 comprend une âme 21, sur laquelle le conducteur applique un effort F₁ avec son pied pour signaler au simulateur son intention de décélérer. L'âme 21 de la pédale 2 est par l'intermédiaire d'un bras 22 à une tige de poussée 25. L'actionnement de la pédale 2 par le conducteur fait alors pivoter l'âme 21 autour d'un centre de rotation 23 donné, différent du centre de réaction 24 de la pédale, placé à l'intersection entre la tige de poussée 25 et le bras 22. La position du centre de rotation 23 est telle que, sous l'actionnement de la pédale 2, le bras 22 transmet a la tige de poussée 25 un effort F₂, parallèle à celle-ci.

Sous l'action de l'effort F₂, la tige de poussée 25 est alors translatée dans l'axe de la force F₂, et déplace à son tour un poussoir 42 du dispositif mécanique 4, qui comprime l'empilement de ressorts1 sur une course fonction de l'effort initial F₁ appliqué par le conducteur sur l'âme 21 de la 2.

Pour que le simulateur de conduite puisse simuler des décélérations (autrement dit, pour que le simulateur puisse reproduire les sensations réelles de d'un véhicule, en mettant en mouvement la cabine du simulateur suite à l'actionnement de la pédale de frein 2) couvrant la plage entière potentielle de la course de la pédale 2, le dispositif 1 comprend en outre des moyens 30 pour mesurer l'effort sur la pédale de frein 2. Ces moyens de mesure 30 sont avantageusement un capteur d'effort 31 et un système 32 électronique de conditionnement, d'amplification et d'acquisition du signal.

De préférence, le capteur d'effort 31 est placé de telle sorte qu'il mesurer l'effort applique sur la pédale 2 par le conducteur. Ainsi, un mode de réalisation, le capteur d'effort 31 est placé sur la tige de poussée 25 de la pédale de frein 2. Avantageusement, la tige de poussée 25 de la pédale 2 est fractionnée en deux parties 25A et 25B : le capteur d'effort 31 est alors fixé au moyen de vis 33 à chacune d'elles et leur d'interface, leur alignement conservé.

Ainsi, le capteur délivre une information d'effort au système électronique d'amplification et de conditionnement, fonction d'une part de l'effort F₂ applique sur le premier segment 25A par le bras, et d'autre part de l'effort F₂ sur le segment 25B par le système mécanique passif 4.

Cette information est transmise tour à tour au système 32 électronique d'acquisition, au bus CAN du simulateur, afin qu'il les traite en temps réel. Ceci permet à un calculateur de un algorithme capable de gérer les profils de loi corrélant la course de la pédale 2 à l'effort de restitution, et de une loi de décélération.

Cette loi de décélération dépend de F₂ d'une part, et de F₂, d'autre part.

En effet, selon la valeur de F₂, le calculateur peut déterminer si le dispositif mécanique passif 4 a atteint ses possibilités physiques (auquel cas il est en mécanique 43). Le cas échéant, il génère une loi de décélération virtuelle fonction de la loi mécanique connue du dispositif mécanique passif 4 (fonction de la position de la pédale) et des informations d'effort délivrées par le capteur 31.

Sinon, il une loi de décélération conventionnelle, dépendant uniquement de la loi physique fonction de la position de la pédale et du mélanique passif 4.

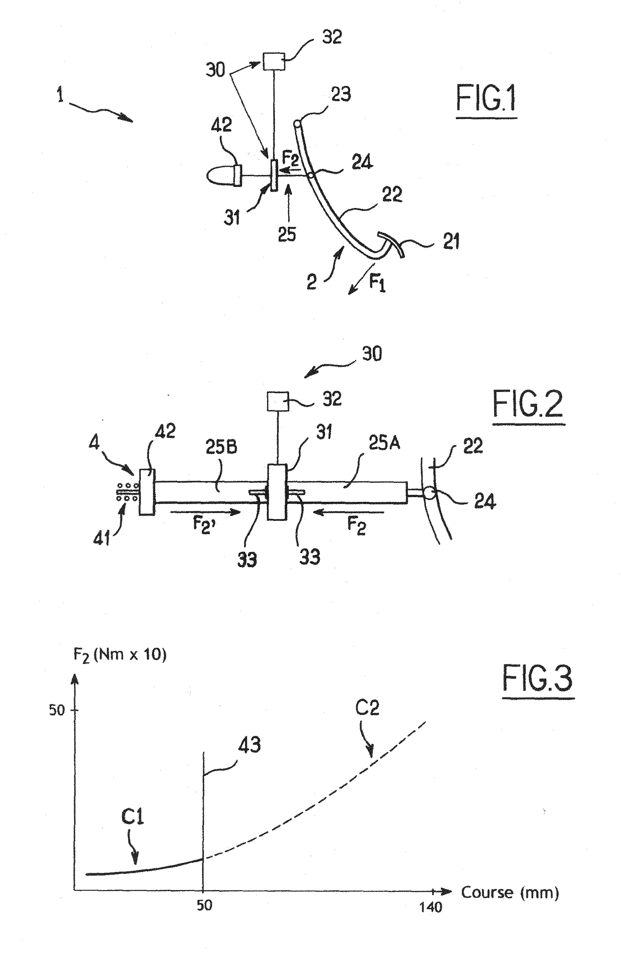

Comme sur la figure 3, on obtient une courbe corrélant la course effectuée par la pédale de frein 2 et l'effort F₂ ressenti par le conducteur lors du balayage intégral de l'espace de travail de la pédale de frein 2 du véhicule réel simulé. Une première partie C1 est des lois mécaniques connues du dispositif passif à ressorts 4 (cette partie correspondant à la plage s'étendant sur les cinquante premiers millimètres, dans le cas de l'exemple illustratif), tandis que la deuxième partie C2, qui de la limite de la courbe C1 (qui correspond à la butée mécanique 43 du dispositif passif 4) à la fin de de travail (140 mm dans le cas d'une de frein conventionnelle pour une automobile), est la représentation d'une loi virtuelle à partir de la logique initiale de la loi physique du dispositif passif 4, et de l'effort F₁ que continue d'exercer le conducteur sur l'âme 21 de la pédale 2 après que celle-ci soit placée en butée 43 de fin de course.

Un avantage de cette loi de décélération physico virtuelle est qu'elle permet de mieux représenter les conditions survenant dans le mode de fonctionnement nominal du véhicule réel, quelles que soient les possibilités du dispositif mécanique passif 4 (c'est-à-dire quel que soit la butée mécanique 43 dudit dispositif 4).

Par exemple, lorsqu'un usager freine de manière continue dans un temps, puis "sèchement et fortement" dans un deuxième temps, l'effort tors de la deuxième de freinage peut être représentée par la courbe virtuelle obtenue grâce au capteur d'effort 31, et la décélération "sèche" peut être par le simulateur de conduite, ce qui n'aurait pas été le cas avec les dispositifs de d'effort connus. Seule la de course ne sera pas reproduite à l'identique au cours de la deuxième de freinage.

Par ailleurs, un autre avantage certain du dispositif est que les moyens de mesure d'effort, à savoir le capteur d'effort 31 et le système 32 électronique de conditionnement, d'amplification et d'acquisition du signal, de en oeuvre un contrôle automatique de la mesure des internes du système mécanique passif 4.

Pour cela, tout au long des simulations, et grâce à la des efforts F₂ et F_{2'}, les moyens de mesure d'effort 30 vérifient les caractéristiques internes du dispositif 4 (notamment la stabilité en raideur des ressorts 41 composant le système mécanique passif) en analysant l'efficacité du dispositif 4 par rapport au temps. On peut donc garantir ainsi la détection et la correction (au cours du traitement des données par le système électronique 32) des informations.

Bien entendu, il est de prolonger la loi virtuelle à une plage de course de la pédale 2 couvrant tout ou partie de celle du dispositif mécanique passif 4.

Enfin, l'invention trouve une application particulièrement intéressante dans les dispositifs de restitution d'efforts actifs, notamment en matière d'anticipation. On envisage en effet de en mémoire grâce à un moyen d'enregistrement plusieurs actions de freinage par un conducteur (les informations concerneraient par exemple la valeur de l'effort appliqué est la d'enfoncement de la par le conducteur), pour en déduire le de conduite du conducteur, la situation du véhicule (embouteillage, conduite en ville, conduite en campagne, conduite sur autoroute, etc.). Le dispositif ainsi de fournir des protocoles pour anticiper des décélérations données du véhicule et les puissances de freinage nécessaires.

Une autre application, en lien avec la précédente, est d'ailleurs de mieux doser la décélération du véhicule, notamment sur les véhicules munis de système de freinage assistés, pour éviter les situations dans lesquelles le véhicule assiste trop le conducteur à basse vitesse, ce qui risque de créer certaine dans sa conduite.

## Revendications

1. Dispositif de restitution d'efforts (1), mis en oeuvre dans la simulation d'une action de freinage opérée par un conducteur sur un simulateur de conduite, comprenant un système mécanique passif (4) relié à une commande de frein (2) prévue sur le simulateur,
**caractérisé en ce qu'**il comprend en outre des moyens de mesure d'effort (30) pour simuler la restitution d'un effort appliqué à la commande de frein (2) au-delà des possibilités physiques du système mécanique passif (4).

2. Dispositif (1) selon la revendication précédente, **caractérisé en ce que** les moyens de mesure d'effort (30) comprennent un capteur d'effort (31) et un système (32) électronique de conditionnement, d'amplification et d'acquisition du signal.

3. Dispositif (1) selon la revendication précédente, en ce que la commande de frein (2) est une de frein, et en ce que le capteur d'efforts (31) est sur la tige de poussée (25) de la de frein (2).

4. Dispositif (1) selon la revendication précédente, en ce que, au moins à partir du moment où la pédale de frein (2) est en butée mécanique, le capteur d'effort (30) détermine la valeur de la pression par le conducteur sur ladite pédale (2) lors de l'action de freinage, afin de simuler le comportement de la cabine du simulateur au cours de l'action de freinage.

5. Dispositif (1) selon l'une des revendications précédentes, **caractérisé en ce qu'**il comprend en outre des moyens (30) pour contrôler automatiquement la mesure des caractéristiques internes du système mécanique passif (4), notamment la stabilité des qui le composent.

6. Dispositif (1) selon la revendication précédente, en combinaison avec la revendication 2, **caractérisé en ce que** moyens (30) contrôlent la des caractéristiques par détection des variations entre la restitution de et la de la commande de frein (2), et **en ce que**, le cas échéant, le système électronique (32) corrige les variations au cours du traitement données.

7. Dispositif selon l'une des revendications 5 ou 6, en ce que moyens de contrôle (30) mettent en oeuvre les moyens de mesure d'effort.

8. Dispositif selon l'une des revendications précédentes, **caractérisé en ce que** le système mécanique passif (4) est un système à de ressorts (41).

9. Procédé pour simuler une action de freinage par un conducteur sur un simulateur de conduite, le simulateur comprenant un mécanique passif (4) relié à une commande de frein (2) prévue sur le simulateur,
**caractérisé en ce qu'**il détecte et corrige en temps réel les variations entre la restitution d'un effort par le système mécanique passif (4) et la course de la commande de frein (2).

10. Procédé selon la revendication précédente, **caractérisé en ce qu'**il met en une loi de décélération virtuelle pour simuler !'actionnement de la de frein (2) lorsqu'une loi physique fonction de la de la de frein (2) ne permet pas de simuler faction de freinage, notamment lorsque le mécanique passif (4) est en butée mécanique (43).

11. Procédé selon l'une des revendications 9 ou 10, **caractérisé en ce qu'**il met en oeuvre un dispositif (1) selon l'une revendications 1 à 8.
